(19) Europäisches Patentamt / European Patent Office / Office européen des brevets

(11) **EP 3 483 899 B1**

(12) **EUROPEAN PATENT SPECIFICATION**

(45) Date of publication and mention
of the grant of the patent:
**28.07.2021 Bulletin 2021/30**

(21) Application number: **17201095.1**

(22) Date of filing: **10.11.2017**

(51) Int Cl.:
*H01B 13/012* (2006.01)     *H05K 9/00* (2006.01)
*B60R 16/02* (2006.01)     *H01B 7/00* (2006.01)
*H02G 3/32* (2006.01)     *H01R 4/66* (2006.01)

(54) **GROUND CONNECTION OF TIE BASES USING GROUNDING WIRE OR TIE BASE GROUNDING STRAP**

MASSEANSCHLUSS VON KABELBINDERMONTAGEANKERN MIT ERDUNGSDRAHT ODER KABELBINDERMONTAGEANKERMASSEBAND

RACCORDEMENT À LA TERRE DE BASES D'ANCRAGE AU MOYEN D'UN CÂBLE DE MISE À LA TERRE OU D'UNE SANGLE DE MISE À LA TERRE DE BASE D'ANCRAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**15.05.2019 Bulletin 2019/20**

(73) Proprietor: **Airbus Defence and Space GmbH 82024 Taufkirchen (DE)**

(72) Inventors:
• **DETTER, Tobias**
**86564 Brunnen (DE)**
• **KHAN, Danish**
**88709 Meersburg (DE)**
• **MEDIAVILLA FERNÁNDEZ, Ignacio**
**80333 München (DE)**

(74) Representative: **Frenkel, Matthias Alexander Wuesthoff & Wuesthoff Patentanwälte PartG mbB Schweigerstraße 2 81541 München (DE)**

(56) References cited:
JP-A- 2005 093 198     JP-A- 2011 062 025
JP-U- H0 720 031     US-A1- 2016 066 483

EP 3 483 899 B1

**Description**

Examples relate to concepts for mitigating electromagnetic interference, EMI, and electrostatic discharge, ESD, and applications thereof and in particular to an arrangement for EMI and ESD mitigation and a method of providing an arrangement for EMI and ESD mitigation.

Arrangements may have to be optimized with respect to EMI and ESD. Nevertheless, it is desired to form an arrangement which is light and easy to manufacture.

JP 2005 093198 A discloses a shield layer being exposed by peeling off a cover material at an intermediate part of each shielded wire. A fastening band with a conductive layer formed at least on the inside surface side of a band part is wound around, fastened to and fixed to a splice part formed by superimposing and bundling a terminal part of a grounding wire on the exposed shield layer.

US 2016/066483 A1 discloses a wire harness shield structure that includes an exterior member that encloses an electrical line group with a plurality of electrical lines so as to hold the electrical line group in a bundled manner, wherein the electrical line group is constituted by a plurality of electrical lines, a shield material that encloses a predetermined section of the electrical line group that is to be shielded, and a ground connection member that grounds the shield member. In an embodiment, the ground connection member comprises an extension joint, an earth lead and a circular grounding terminal connecting a drain line contacting the shield material with a vehicle body panel. In another embodiment, a ground connection member in the form of a band clip is provided that comprises a first junction portion that is in the form of a band clip and encloses the exterior member while being in contact with the shield material, and a second junction portion that is in the form of an anchor hook and is capable of mechanically locking the first junction portion to a metal panel on a vehicle body.

JP H07 20031 U discloses a band clip with a clip body having a locking hole for inserting and locking the distal end side of a band portion at the base end of the band portion that bundles the electric wires by rolling it in a loop shape. An anchor projection for a panel through hole is provided on a back side of the clip body. The anchor projections provided on the clip body are inserted and fixed in through holes of the panel. As a result, a shield member of the electric wire is electrically connected to the panel and grounded via the conductive sheet piece.

In JP 2011 062025 A, a clamp is connected by means of a fixing screw to a grounding metal base such as a seat surface of the vehicle body.

There may be a demand to provide concepts for arrangements with reduced EMI and ESD effects.

The present application provides an arrangement for electromagnetic interference and a method of providing the same with the features of the independent claims. Specific embodiments are defined by the dependent claims.

It is also to be understood that the terms used herein are for purpose of describing individual embodiments and are not intended to be limiting. Unless otherwise defined, all technical and scientific terms used herein have the meaning which corresponds to the general understanding of the skilled person in the relevant technical field of the present disclosure; they are to be understood too neither too far nor too narrow. If technical terms are used incorrectly in the present disclosure, and thus do not reflect the technical concept of the present disclosure, these should be replaced by technical terms which convey a correct understanding to the skilled person in the relevant technical field of the present disclosure. The general terms used herein are to be construed based on the definition in the lexicon or the context. A too narrow interpretation should be avoided.

It is to be understood that terms such as e.g. "comprising" "including" or "having" etc. mean the presence of the described features, numbers, operations, acts, components, parts, or combinations thereof, and do not exclude the presence or possible addition of one or more further features, numbers, operations, acts, components, parts or their combinations.

Although terms like "first" or "second" etc. may be used to describe different components or features, these components or features are not to be limited to these terms. With the above terms, only one component is to be distinguished from the other. For example, a first component may be referred to as a second component without departing from the scope of the present disclosure; and a second component may also be referred to as a first component. The term "and/or" includes both combinations of the plurality of related features, as well as any feature of that plurality of the described plurality of features.

In the present case, if a component is "connected to", "in communication with" or "accesses" another component, this may mean that it is directly connected to or directly accesses the other component; however, it should be noted that another component may be therebetween. If, on the other hand, a component is "directly connected" to another component or "directly accesses" the other component, it is to be understood that no further components are present therebetween.

In the following, the preferred embodiments of the present disclosure will be described with reference to the accompanying drawings; the same components are always provided with the same reference symbols.

In the description of the present disclosure, detailed explanations of known connected functions or constructions are omitted, insofar as they are unnecessarily distracting from the present disclosure; such functions and constructions are, however, understandable to the skilled person in the technical field of the present disclosure. The accompanying drawings are illustrative of the present disclosure and are not to be construed as a limitation. The technical idea of the present disclosure is to be construed as comprising, in addition to the accompanying drawings, all such modifications, variations and variants.

Other objects, features, advantages and applications will become apparent from the following description of non-limiting embodiments regarding the accompanying drawings. In the drawings, all described and/or illustrated features, alone or in any combination form the subject matter disclosed therein, irrespective of their grouping in the claims or their relations/references. The dimensions and proportions of components or parts shown in the figures are not necessarily to scale; these dimensions and proportions may differ from illustrations in the figures and implemented embodiments.

Figure 1     schematically illustrates an arrangement for mitigating EMI and ESD;

Figure 2     schematically illustrates a plurality of arrangements for mitigating EMI and ESD;

Figure 3     schematically illustrates a flow chart of a method of providing an arrangement for mitigating EMI and ESD;

Figure 4     schematically illustrates an arrangement with a grounding wire on a top surface of the tie base;

Figure 5     schematically illustrates a variant for use of a tie base grounding strap as electrical conductor;

Figure 6     schematically illustrates an arrangement with a grounding wire on a top surface of the tie base; and

Figure 7     schematically illustrates a chart showing antenna effects over a free running wire.

Accordingly, while further examples are capable of various modifications and alternative forms, some particular examples thereof are shown in the figures and will subsequently be described in detail. However, this detailed description does not limit further examples to the particular forms described. Further examples may cover all modifications, equivalents, and alternatives falling within the scope of the disclosure as defined by the appended claims.

Like numbers refer to like or similar elements throughout the description of the figures, which may be implemented identically or in modified form when compared to one another while providing for the same or a similar functionality.

It will be understood that when an element is referred to as being "connected" or "coupled" to another element, the elements may be directly connected or coupled or via one or more intervening elements. If two elements A and B are combined using an "or", this is to be understood to disclose all possible combinations, i.e. only A, only B as well as A and B. An alternative wording for the same combinations is "at least one of A and B". The same applies for combinations of more than 2 elements.

The terminology used herein for the purpose of describing particular examples is not intended to be limiting for further examples. Whenever a singular form such as "a," "an" and "the" is used and using only a single element is neither explicitly or implicitly defined as being mandatory, further examples may also use plural elements to implement the same functionality. Likewise, when a functionality is subsequently described as being implemented using multiple elements, further examples may implement the same functionality using a single element or processing entity. It will be further understood that the terms "comprises," "comprising," "includes" and/or "including," when used, specify the presence of the stated features, integers, steps, operations, processes, acts, elements and/or components, but do not preclude the presence or addition of one or more other features, integers, steps, operations, processes, acts, elements, components and/or any group thereof.

Unless otherwise defined, all terms (including technical and scientific terms) are used herein in their ordinary meaning of the art to which the examples belong.

The arrangement and the method will now be described with respect to the embodiments.

In the following, without being restricted thereto, specific details are set forth to provide a thorough understanding of the present disclosure. However, it is clear to the skilled person that the present disclosure may be used in other embodiments, which may differ from the details set out below.

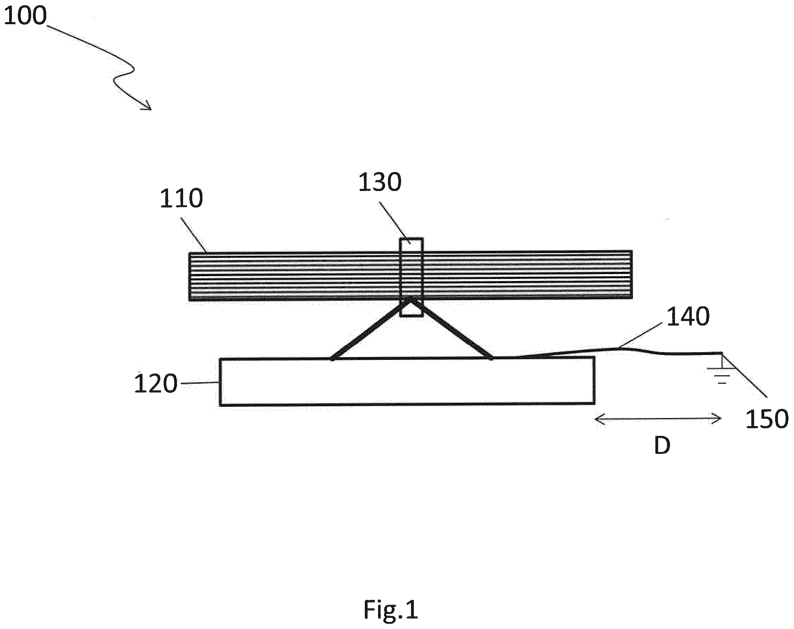

Figure 1 schematically illustrates an arrangement for mitigating EMI and ESD. The arrangement 100 for electromagnetic interference, EMI, and electrostatic discharge, ESD, mitigation is provided. The arrangement 100 comprises a harness 110, a tie base 120, a tie wrap 130, a ground reference 150 and an electrical conductor 140. The harness has a shielding. The shielding of the harness 110 is adapted to electrically shield a plurality of (electrical) cables of the harness. The shielding of the harness 110 is directly connected to the tie base 120 under use of the tie wrap 130. The ground reference 150 is electrically connected to the tie base 120 via the electrical conductor 140. A dimension of (a section of) the electrical conductor 140 between the ground reference 150 and the tie base 120 is smaller than 15 cm.

For example, the ground reference 150 may be a ground reference plane 150. The ground reference 150 plane may be in line with (a bottom surface or a top surface) of the tie base 120. Thus, a shortest distance D for the electrical conductor 140 can be achieved. Further, the ground reference plane may be aligned with the tie base to be at a same level or plane.

The shielding of the harness 110 is adapted to protect the harness against EMI and ESD.

For example, the plurality of (electrical) cables of the harness 110 may comprise electrical cables for data and power supply. The plurality of (electrical) cables may be protected against EMI and ESD by means of the shielding 110, such that along a length of the plurality of cables of the harness 110, the shielding of the harness 110 110 encircles, surrounds or boxes the plurality of cables.

For example, the ground reference 150 may be a rail or an airplane envelope, airplane strut or airplane fuselage.

The dimension D of the electrical conductor 140 between the ground reference 150 and the tie base 120 is smaller than 15 cm (or may be 14 cm or 13 cm or 12 cm or 11 cm or 10 cm or 9 cm or 8 cm or 7 cm or 6 cm or 5 cm). The dimension D of the electrical conductor 140 between the ground reference 150 and the tie base 120 may be larger than 0,5 cm (or 1cm or 2 cm or 3 cm or 4 cm). The dimension D can be a section of a length of the electrical conductor 140. The section may be defined as a shortest distance D between the tie base 120 and the ground reference 150.

The direct connection between the tie base 120 and the shielding of the harness 110 is established via tightening the tie wrap 130. The tie wrap 130 may lead through an opening of the tie base 120. The tie wrap 130 encircles the shielding of the harness 110. The tie wrap 130 leads through an eyelet of the tie base 120.

For example, the (only one) electrical conductor 140 may be a single electrical conductor 140.

The tie base 120 is a metallic tie base.

The arrangement 100 further comprises a support structure. The tie base 120 is attached to the support structure by an adhesive, for example a (structural) glue.

For example, the (only one) electrical conductor 140 may be a grounding hook-up wire, for example a stranded hook-up wire. The (only one) electrical conductor 140 may be a grounding strap, for example a cho-foil.

For example, the (only one) electrical conductor 140 can be attached to a top surface of the tie base 120. The (only one) electrical conductor 140 can be attached to a bottom surface of the tie base 120.

For example, the (only one) electrical conductor 140 may be a single electrical conductor 140.

The bottom surface of the tie base 120 is attached to the support structure by the adhesive. The support structure can be a support substrate. The tie base 120 has an eyelet for the tie wrap 130 to be led through, such that the shielding of the harness 110 can directly be connected. The tie base 120 has the top surface and the bottom surface. The eyelet is on the top surface of the tie base 120. The bottom surface of the tie base 120 may be glued to a support structure. The support structure may be a fixed element, such that the arrangement 100 is not able to move. The (only one) electrical conductor 140 may be glued to (the bottom surface of the) tie base 120 together with (simultaneously) gluing the tie base 120 to the support structure. Further, the (only one) electrical conductor 140 may be attached to (the top surface of the) tie base 120 after gluing the tie base 120 to the support structure.

For example, the support structure may be conductive. The support structure may be non-conductive. The conductive support structure may be a conductive substrate, such as an aluminium skin. The non-conductive support structure may be a non-conductive substrate, such as a Carbon Fibre Reinforced Polymer, CFRP, skin.

For example, the dimension D of (a section of) the (only one) electrical conductor 140 between the ground reference 150 and the tie base 120 may be adjustable between 1 cm and 6 cm. The dimension D (of the section) may depend on a frequency to be mitigated by the arrangement 100.

For example, the frequency to be mitigated may be a frequency which interferes with an operation for which at least one of the plurality of the (electrical) cables are to be used.

For example, the arrangement may further comprise another tie base 120, another tie wrap 130, and another electrical conductor 140. The shielding of the harness 110 may be directly connected to the other tie base 120 under use of the other tie wrap 130. The ground reference 150 may be electrically connected to the other tie base 120 via the other electrical conductor. Another dimension D of the other electrical conductor 140 between the ground reference 150 and the other tie base 120 may be smaller than 15 cm. A distance L between the tie base 120 and the other tie base 120 may be between 15 cm and 20 cm. The distance L may be defined as a length along the harness 110. The other dimension D may be the same as or corresponds to the dimension D.

For example, the tie base 120 and the other tie base 120 may be arranged along a dimension of an airplane fuselage.

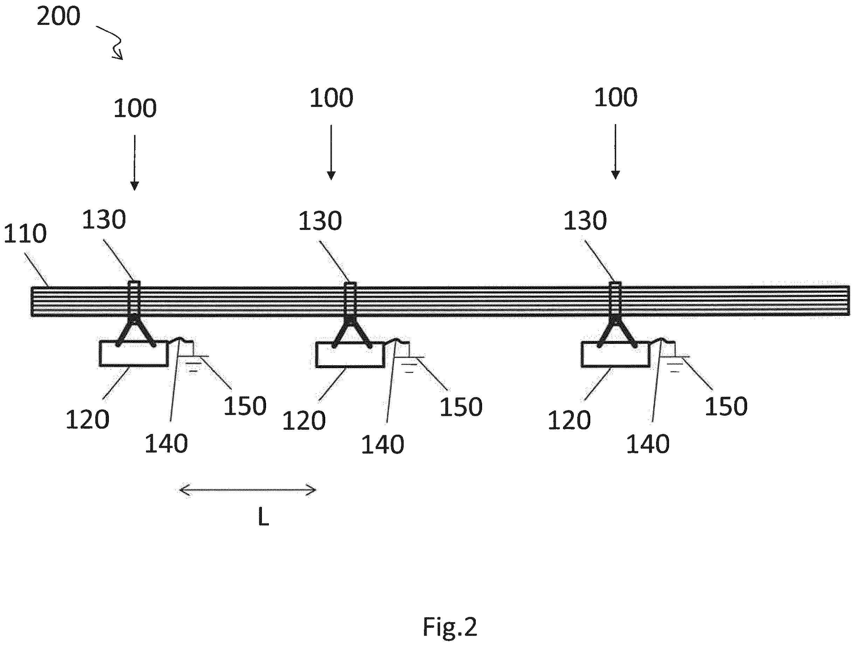

More details and aspects are mentioned in connection with the embodiments described above or below. The embodiment shown in Fig. 1 may comprise one or more optional additional features corresponding to one or more aspects mentioned in connection with the proposed concept or one or more embodiments described below (e.g. Fig. 2 - 7).

Figure 2 schematically illustrates a plurality of arrangements 200 for mitigating EMI and ESD. Each 100 of the plurality of arrangements 200 may correspond to an arrangement 100 of figure 1. A distance between respective arrangements 100 of the plurality of arrangements 200 is between 15 cm and 20 cm.

For example, respective arrangements 100 of the plurality of arrangements 200 may be arranged along a dimension of an airplane fuselage.

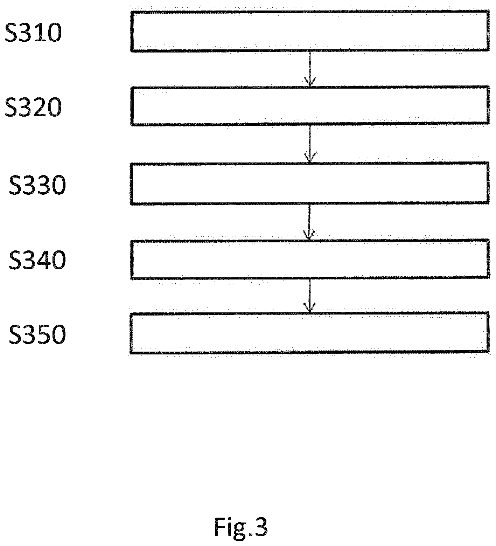

More details and aspects are mentioned in connection with the embodiments described above or below. The embodiment shown in Fig. 2 may comprise one or more optional additional features corresponding to one or more aspects mentioned in connection with the proposed concept or one or more embodiments described above (e.g. Fig. 1) or below (e.g. Fig. 3 - 7).

Figure 3 schematically illustrates a flow chart of a method of providing an arrangement for mitigating EMI and ESD. The method comprises providing S310 a harness having a shielding. The shielding of the harness electrically shields a plurality of (electrical) cables of the harness. The method comprises providing S320 a tie base. The method comprises providing S320 a tie wrap. The method comprises directly connecting S330 the shielding of the harness to the tie base under use of the tie wrap. The method comprises providing S340 a ground reference. The method comprises providing S340 an (only one) electrical conductor. The method comprises electrically connecting S350 the ground reference to the tie base via the electrical conductor. A dimension D of (a section of) the electrical conductor between the ground reference and the tie base is smaller than 15 cm.

The method further comprises providing a support structure. The method may further comprise attaching a bottom surface of the tie base to the support structure by means of an adhesive.

For example, the electrical conductor may be attached to the bottom surface of the tie base simultaneously with the step of attaching the bottom surface of the tie base to the support structure by means of the adhesive.

For example, the adhesive may be the glue to be used for attaching the tie base to the support structure.

For example, the electrical conductor may be attached to a top surface of the tie base.

For example, the electrical conductor may be attached to the tie base by soldering or by fastening the electrical conductor to protrusions (on the top surface) of the tie base.

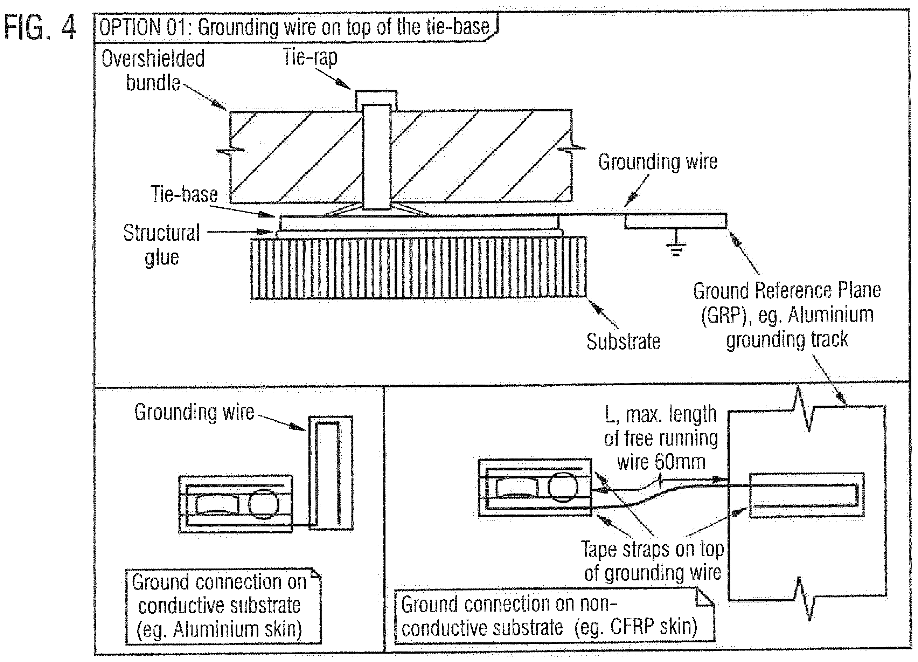

More details and aspects are mentioned in connection with the embodiments described above or below. The embodiment shown in Fig. 3 may comprise one or more optional additional features corresponding to one or more aspects mentioned in connection with the proposed concept or one or more embodiments described above (e.g. Fig. 1 - 2) or below (e.g. Fig. 4 - 7).

Figure 4 schematically illustrates an arrangement with a grounding wire on a top surface of the tie base. The manufacturing solution may have the advantage of the existing fixation elements, usually tie-bases, to put the harness overshielding (herein also used as shielding) in contact with the ground reference plane (GRP). Further, the tie-base is directly connected to the Ground Reference Plane (GRP) by means of a grounding hook-up wire, for example an AWG28. The intermediate grounding of the harness is achieved by contact between the overall shield of the bundle and the tie-base, pressed by the tie-wrap around, and from the tie-base to the GRP.

Depending whether the grounding wire is introduced before or after gluing the tie-base, and depending whether the substrate that the tie-base is glued onto is conductive or non-conductive, different options (01 and 02) exist.

Option 01 is schematically illustrated in figure 4: Grounding wire on top of the tie-base. This option is suitable to connect the tie-base to ground after gluing the tie-base.

For example, option 01 may be applied later even if not foreseen before.

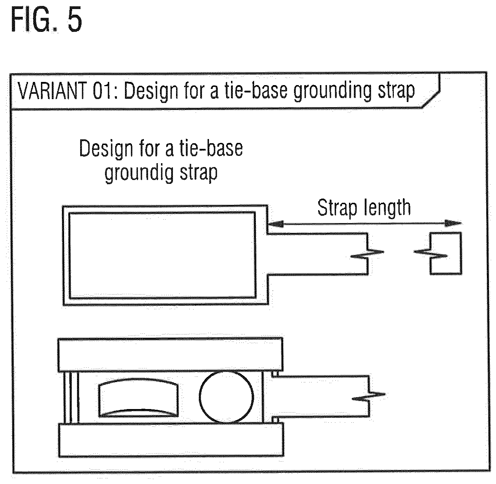

More details and aspects are mentioned in connection with the embodiments described above or below. The embodiment shown in Fig. 4 may comprise one or more optional additional features corresponding to one or more aspects mentioned in connection with the proposed concept or one or more embodiments described above (e.g. Fig. 1 - 3) or below (e.g. Fig. 5 - 7).

Figure 5 schematically illustrates a variant for use of a tie base grounding strap as electrical conductor. This is a variant of option 01 as shown in figure 4 to ground the tie-base by means of grounding strap.

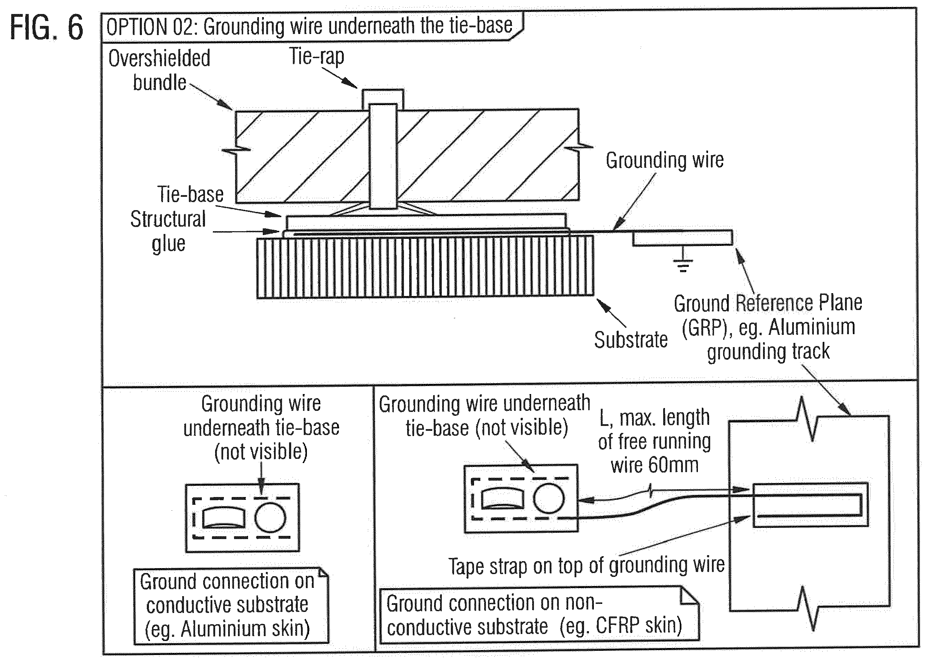

More details and aspects are mentioned in connection with the embodiments described above or below. The embodiment shown in Fig. 5 may comprise one or more optional additional features corresponding to one or more aspects mentioned in connection with the proposed concept or one or more embodiments described above (e.g. Fig. 1 - 4) or below (e.g. Fig. 6 - 7).

Figure 6 schematically illustrates an arrangement with a grounding wire on a top surface of the tie base. This figure corresponds to Option 02 as mentioned with respect to figure 4 and 5: Grounding wire underneath the tie-base. This option has to be performed when gluing the tie-base because the grounding wire is embedded in the structural glue that bonds the tie-base to the substrate.

Option 02 may also have the following advantages:

- When applied on conductive substrate (e.g. Aluminium skin), the resistance value is <1mOhm;
- When applied on conductive substrate, it is a non-destructible ground connection that remains unalterable over a never ending period; and
- The presence of the grounding wire embedded in the glue also allows tracking the thickness of the applied glue.

The low-resistance values of these constructions can only be achieved due to:

1. Specific size and shape of the grounding wire in contact with the aluminium substrate of the tie-base and GRP respectively.
2. Specific surface preparation of the aluminium substrate of the tie-base and GRP.

Typically the harness (plurality of (electrical) cables) is fixed every 15cm to 20cm, which fits the desired distance between intermediate grounding points for the frequencies of concern in an S/C application. Further, the solution can be tailored to the design needs in two ways:

1. Distance between tie-bases, which can easily be adjusted as needed for the frequencies of concern.
2. Maximum length of the free running wire (here shown as 60mm)

The impedance Z (ohms) of the ground wire is mathematically represented (in this case) by:

$$Z = R + j\omega L \quad (1)$$

Where

$$R = \frac{l}{\sigma A} \quad (2)$$

And

$$L = 2x10^{-4}\left(\ln\left(\frac{4l}{d}\right) - 1 + \frac{d}{2l} + \mu_r \frac{T(x)}{4}\right)(\mu H) \quad (3)$$

And

$$T(x) = \sqrt{\frac{0.873 + 0.002}{1 - 0.278x + 0.128x^2}} \quad (4)$$

Where

$$x = \pi d\left(\sqrt{\frac{2\mu_r \mu_0 f}{\sigma}}\right) \quad (5)$$

In (2) thru (5):

d: Diameter of wire (cm)
f: frequency (Hz)
l: Length of wire (cm)
$\mu_r$: relative permeability
$\mu_0$: permeability of free space ($4\pi10$-7 H/m)
$\sigma$: electrical conductivity (S/m)

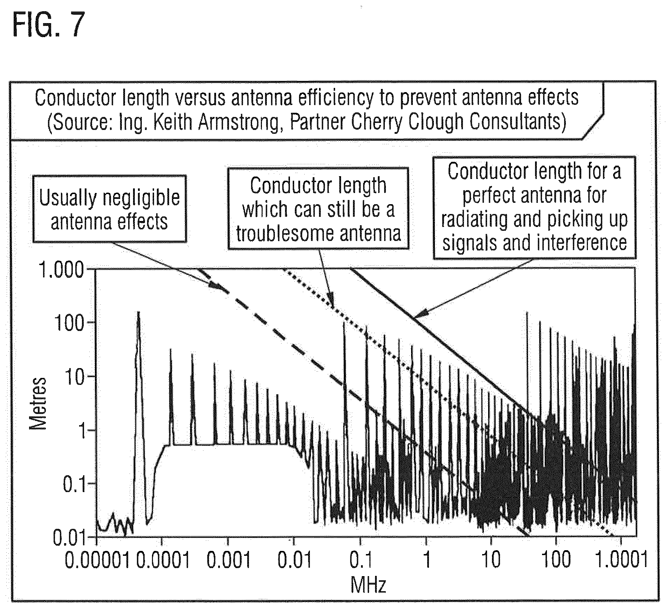

More details and aspects are mentioned in connection with the embodiments described above or below. The embodiment shown in Fig. 6 may comprise one or more optional additional features corresponding to one or more aspects mentioned in connection with the proposed concept or one or more embodiments described above (e.g. Fig. 1 - 5) or below (e.g. Fig. 7).

Figure 7 schematically illustrates a chart showing antenna effects over a free running wire. The maximum length of the free-running wire to prevent an antenna effect can be defined or chosen by use of the chart.

Further, a theoretical and practical basis is given for multi-point grounding, as follows.

In theory, when the wavelength of signal/source frequency becomes comparable to harness length (i.e. the harness is electrically long), lumped circuit concept can no longer be used for harness overall shield impedance modelling. Instead, distributed element modelling is used as the induced current on the harness overall shield is a function of the distance over the shield. One of the main justifications to multi-point grounding is that without intermediate grounding for an electrically long harness shield, various points of the shield are not at the same potential, therefore a point on the shield physically connected to the ground will have a non-zero potential difference when compared to a $2^{nd}$ point that is farther out on the shield. This leads to capacitive coupling between the $2^{nd}$ shield point and the ground reference rail underneath this $2^{nd}$ shield point. To mitigate this effect, intermediate ground points are generally introduced. These grounding points must meet certain criterion for the design including very short electrical length and low impedance both of which are related to the frequency of concern for the design. This alludes to the notion that shielding is to minimize electric field coupling or capacitive coupling. For low frequencies, connecting the shield at either end of the reference ground point eliminates the capacitive coupling issues however for electrically long line; multiple point grounding must be used for such mitigation of capacitive coupling.

In practice, when a shield is grounded at multiple points, circulating currents tend to flow along a portion of the shield, whereas if the shield is grounded at one end only, current will flow along the entire length of the shield in turn causing induced voltages inside the wires protected by the shield.

More details and aspects are mentioned in connection with the embodiments described above or below. The embodiment shown in Fig. 7 may comprise one or more optional additional features corresponding to one or more aspects mentioned in connection with the proposed concept or one or more embodiments described above (e.g. Fig. 1 - 6) or below.

According to one or more aspects, following advantages may be achieved:

- Light construction.
- No ground inserts are needed in the arrangement.
- Suitable for stringent cleanliness environments, such as ISO5 (optical instrument)
- Flexible design to adjust the distance between tie-base and maximum free running length of grounding wire.
- Consistently reliable low impedance < 50mOhm can be achieved.
- Simplification of harness manufacturing and integration, since neither drain-wires nor terminals are needed.

According to an aspect, intermediate grounding of a harness overall-shield as well as grounding of metallic floating parts may be provided. Intermediate grounding of the harness is one of the most indicated EMI and ESD control techniques whilst for ESD prevention purposes it may be required not to have any floating electrically conductive parts.

According to an aspect, extremely low impedance grounding path from overall harness shield to Ground Reference Plane (GRP) at intermediate points (multiple point grounding) may be desirable. Due to the materials, techniques and processes, this may often not achievable in practice.

According to an aspect, a method may be provided to achieve a low impedance path between the overall harness shield to the ground plane (that is feasible).

For example, multi-point grounding is a practice used in high frequency design from component level all the way up to system level.

According to an aspect, a focus of this disclosure may lie on system level multi-point grounding practice specifically intermediate grounding of the overall harness shield to the ground plane (or ground reference network when support structure is non-conductive).

According to an aspect, grounding of an overall harness shield to the ground plane is performed in general using a cho-foil which is primarily a non-conductive adhesive backed conductive foil. This foil may be wrapped once over the harness and attached (by its adhesive) to the grounding rail/plane. DC resistance from a conductive point on the overall harness shield to the ground plane through such a cho-foil may typically be in the high 10s of milli-Ohms range which may not be acceptable for high performance application especially when low impedance requirements are critical and a slight susceptibility to the victim circuit harness can cause nuisance. At high frequencies (where multiple point grounding may become crucial), this method may result in high impedance due to inherent capacitance imparted by the non-conductive glue between the cho-foil and the overall harness shield and the cho-foil and the ground plane.

According to an aspect, performance may be improved and the glue may be omitted to ensure mitigation of capacitive coupling. For example, the DC resistance may be reduced by at least an order of magnitude (if not two).

The aspects and features mentioned and described together with one or more of the previously detailed examples and figures, may as well be combined with one or more of the other examples in order to replace a like feature of the other example or in order to additionally introduce the feature to the other example.

The description and drawings merely illustrate the principles of the disclosure. Furthermore, all examples recited herein are principally intended expressly to be only for pedagogical purposes to aid the reader in understanding the principles of the disclosure and the concepts contributed by the inventor(s) to furthering the art. All statements herein reciting principles, aspects, and examples of the disclosure, as well as specific examples thereof, are intended to encompass equivalents thereof.

It is to be understood that the disclosure of multiple acts, processes, operations, steps or functions disclosed in the specification or claims may not be construed as to be within the specific order, unless explicitly or implicitly stated otherwise, for instance for technical reasons. Therefore, the disclosure of multiple acts or functions will not limit these to a particular order unless such acts or functions are not interchangeable for technical reasons. Furthermore, in some examples a single act, function, process, operation or step may include or may be broken into multiple sub-acts, -functions, -processes, -operations or -steps, respectively. Such sub acts may be included and part of the disclosure of this single act unless explicitly excluded.

**Claims**

1. An arrangement (100) for electromagnetic interference, EMI, and electrostatic discharge, ESD, mitigation, the arrangement (100) comprising:

   a harness(110) having a shielding, which is adapted to electrically shield a plurality of cables of the harness (110);
   a metallic tie base (120) having an eyelet on a first surface;
   a tie wrap (130), wherein the shielding of the harness (110) is directly connected to the eyelet of the tie base (120) under use of the tie wrap (130);
   a support structure to which a second surface opposite to the first surface of the metallic tie base (120) is attached by an adhesive;
   a ground reference (150);
   and an electrical conductor (140), wherein the ground reference (150) is electrically connected to the tie base (120) via the electrical conductor (140), wherein the electrical conductor (140) is attached to the first surface of the metallic tie base (120), or wherein the electrical conductor (140) is attached to the second surface of the metallic tie base (120); and
   wherein a dimension (D) of the electrical conductor (140) between the ground reference (150) and the tie base (120) is smaller than 15 cm,
   wherein the direct connection between the tie base (120) and the shielding of the harness (110) is established via the tie wrap (130) tightened around the harness (110), wherein the tie wrap (130) leads through the eyelet of the tie base (120) and encircles the shielding of the harness (110).

2. An arrangement (100) according to claim 1, wherein the electrical conductor (140) is a grounding hook-up wire, for example a stranded hook-up wire, or a grounding strap.

3. An arrangement (100) according to any one of the foregoing claims, wherein the electrical conductor is a single electrical conductor (140).

4. An arrangement (100) according to any one of the foregoing claims, wherein the support structure is conductive.

5. An arrangement (100) according to any one of claims 1 to 3, wherein the support structure is non-conductive.

6. An arrangement (100) according to any one of the foregoing claims, wherein the dimension of the electrical conductor (140) between the ground reference (150) and the tie base (120) is adjustable between 1 cm and 6 cm.

7. An arrangement (100) according to any one of the foregoing claims, wherein the arrangement further comprises:

   another metallic tie base (120) and another tie wrap (130), wherein the shielding of the harness (110) is directly connected to an eyelet on a first surface of the other tie base (120) under use of the other tie wrap (130) and wherein a second surface opposite to the first surface of the other metallic tie base (120) is attached to the support structure by an adhesive;
   another electrical conductor (140), wherein the ground reference (150) is electrically connected to the other tie base (120) via the other electrical conductor (140), wherein the other electrical conductor (140) is attached to the first surface of the other metallic tie base (120), or wherein the other electrical conductor (140) is attached to the second surface of the other metallic tie base (120);
   wherein another dimension (D) of the other electrical conductor (140) between the ground reference (150) and the other tie base (120) is smaller than 15 cm; and

wherein a distance (L) between the tie base (120) and the other tie base (120) is between 15 cm and 20 cm.

8. An arrangement (200) according to claim 7, wherein the tie base (120) and the other tie base (120) are arranged along a dimension of an airplane fuselage.

9. A method of providing an arrangement for electromagnetic interference, EMI, and electrostatic discharge, ESD, mitigation, the method comprising:

providing (S310) a harness having a shielding, which electrically shields a plurality of cables of the harness;
providing (S320) a metallic tie base and a tie wrap, and directly connecting (S330) the shielding of the harness to an eyelet on a first surface of the tie base under use of the tie wrap by tightening the tie wrap around the harness so as to encircle the shielding of the harness and leading the tie wrap through the eyelet of the tie base;
providing a support structure and attaching a second surface opposite to the first surface of the metallic tie base to the support structure by an adhesive;
providing (S340) a ground reference and an electrical conductor, and electrically connecting (S350) the ground reference to the tie base via the electrical conductor, wherein electrically connecting (S350) the tie base to the ground reference via the electrical conductor either includes attaching the electrical conductor to the first surface of the metallic tie base, or attaching the electrical conductor to the second surface of the metallic tie base; and
wherein a dimension of the electrical conductor between the ground reference and the tie base is smaller than 15 cm.

**Patentansprüche**

1. Anordnung (100) zur Abschwächung von elektromagnetischer Interferenz, EMI, und elektrostatischer Entladung, ESD, wobei die Anordnung (100) umfasst:

einen Kabelbaum (110) mit einer Abschirmung, die dazu geeignet ist, eine Vielzahl von Kabeln des Kabelbaums (110) elektrisch abzuschirmen;
eine metallische Verbindungsbasis (120) mit einer Öse auf einer ersten Oberfläche;
einen Kabelbinder (130), wobei die Abschirmung des Kabelbaums (110) direkt mit der Öse der Verbindungsbasis (120) unter Verwendung des Kabelbinders (130) verbunden ist;
eine Trägerstruktur, an der eine zweite Oberfläche, die der ersten Oberfläche der metallischen Verbindungsbasis (120) gegenüberliegt, durch einen Klebstoff befestigt ist;
eine Massereferenz (150);
und einen elektrischen Leiter (140), wobei die Massereferenz (150) über den elektrischen Leiter (140) mit der Verbindungsbasis (120) elektrisch verbunden ist, wobei der elektrische Leiter (140) an der ersten Oberfläche der metallischen Verbindungsbasis (120) befestigt ist, oder wobei der elektrische Leiter (140) an der zweiten Oberfläche der metallischen Verbindungsbasis (120) befestigt ist; und
wobei eine Abmessung (D) des elektrischen Leiters (140) zwischen der Massereferenz (150) und der Verbindungsbasis (120) kleiner als 15 cm ist,
wobei die direkte Verbindung zwischen der Verbindungsbasis (120) und der Abschirmung des Kabelbaums (110) über den um den Kabelbaum (110) festgezogenen Kabelbinder (130) hergestellt wird, wobei der Kabelbinder (130) durch die Öse der Verbindungsbasis (120) führt und die Abschirmung des Kabelbaums (110) umgibt.

2. Anordnung (100) nach Anspruch 1, wobei der elektrische Leiter (140) ein Erdungsschaltdraht, beispielsweise eine Schaltlitze, oder ein Erdungsband ist.

3. Anordnung (100) nach einem der vorhergehenden Ansprüche, wobei der elektrische Leiter ein einzelner elektrischer Leiter (140) ist.

4. Anordnung (100) nach einem der vorhergehenden Ansprüche, wobei die Trägerstruktur leitfähig ist.

5. Anordnung (100) nach einem der Ansprüche 1 bis 3, wobei die Trägerstruktur nichtleitend ist.

6. Anordnung (100) nach einem der vorhergehenden Ansprüche, wobei die Abmessung des elektrischen Leiters (140) zwischen der Massereferenz (150) und der Verbindungsbasis (120) zwischen 1 cm und 6 cm einstellbar ist.

**7.** Anordnung (100) nach einem der vorhergehenden Ansprüche, wobei die Anordnung ferner umfasst:

eine andere metallische Verbindungsbasis (120) und einen anderen Kabelbinder (130), wobei die Abschirmung des Kabelbaums (110) direkt mit einer Öse auf einer ersten Oberfläche der anderen Verbindungsbasis (120) unter Verwendung des anderen Kabelbinders (130) verbunden ist, und wobei eine zweite Oberfläche, die der ersten Oberfläche der anderen metallischen Verbindungsbasis (120) gegenüberliegt, an der Trägerstruktur durch einen Klebstoff befestigt ist;

einen anderen elektrischen Leiter (140), wobei die Massereferenz (150) elektrisch mit der anderen Verbindungsbasis (120) über den anderen elektrischen Leiter (140) verbunden ist, wobei der andere elektrische Leiter (140) an der ersten Oberfläche der anderen metallischen Verbindungsbasis (120) befestigt ist, oder wobei der andere elektrische Leiter (140) an der zweiten Oberfläche der anderen metallischen Verbindungsbasis (120) befestigt ist;

wobei eine weitere Abmessung (D) des anderen elektrischen Leiters (140) zwischen der Massereferenz (150) und der anderen Verbindungsbasis (120) kleiner als 15 cm ist; und

wobei ein Abstand (L) zwischen der Verbindungsbasis (120) und der anderen Verbindungsbasis (120) zwischen 15 cm und 20 cm beträgt.

**8.** Anordnung (200) nach Anspruch 7, wobei die Verbindungsbasis (120) und die andere Verbindungsbasis (120) entlang einer Abmessung eines Flugzeugrumpfs angeordnet sind.

**9.** Verfahren zum Bereitstellen einer Anordnung zur Abschwächung von elektromagnetischer Interferenz, EMI, und elektrostatischer Entladung, ESD, wobei das Verfahren umfasst:

Bereitstellen (S310) eines Kabelbaums mit einer Abschirmung, die eine Vielzahl von Kabeln des Kabelbaums elektrisch abschirmt;

Bereitstellen (S320) einer metallischen Verbindungsbasis und eines Kabelbinders, und direktes Verbinden (S330) der Abschirmung des Kabelbaums mit einer Öse auf einer ersten Oberfläche der Verbindungsbasis unter Verwendung des Kabelbinders, indem der Kabelbinder um den Kabelbaum herum festgezogen wird, um die Abschirmung des Kabelbaums zu umgeben und den Kabelbinder durch die Öse der Verbindungsbasis zu führen;

Bereitstellen einer Trägerstruktur und Befestigen einer zweiten Oberfläche gegenüber der ersten Oberfläche der metallischen Verbindungsbasis an der Trägerstruktur durch einen Klebstoff;

Bereitstellen (S340) einer Massereferenz und eines elektrischen Leiters, und elektrisches Verbinden (S350) der Massereferenz mit der Verbindungsbasis über den elektrischen Leiter, wobei das elektrische Verbinden (S350) der Verbindungsbasis mit der Massereferenz über den elektrischen Leiter entweder das Befestigen des elektrischen Leiters an der ersten Oberfläche der metallischen Verbindungsbasis oder das Befestigen des elektrischen Leiters an der zweiten Oberfläche der metallischen Verbindungsbasis umfasst; und

wobei eine Abmessung des elektrischen Leiters zwischen der Massereferenz und der Verbindungsbasis kleiner als 15 cm ist.

**Revendications**

**1.** Système (100) pour réduire la décharge électrostatique, ESD, et l'interférence électromagnétique, EMI, le système (100) comprenant :

un faisceau (110) ayant un blindage, qui est conçu pour protéger électriquement une pluralité de câbles du faisceau (110) ;

une base d'attache métallique (120) ayant un œillet sur une première face ;

une ceinture de câble (130), le blindage du faisceau (110) étant directement raccordé à l'œillet de la base d'attache (120) à l'aide de la ceinture de câble (130) ;

une structure de support à laquelle est fixée par un adhésif une seconde face en regard de la première face de la base d'attache métallique (120) ;

une référence de masse (150) ;

et un conducteur électrique (140), la référence de masse (150) étant connectée électriquement à la base d'attache (120) par le conducteur électrique (140), le conducteur électrique (140) étant fixé à la première face de la base d'attache métallique (120), ou le conducteur électrique (140) étant fixé à la seconde face de la base d'attache métallique (120) ; et

une dimension (D) du conducteur électrique (140) entre la référence de masse (150) et la base d'attache (120) étant inférieure à 15 cm,

la connexion directe entre la base d'attache (120) et le blindage du faisceau (110) étant établi par la ceinture de câble (130) serrée autour du faisceau (110), la ceinture de câble (130) passant à travers l'œillet de la base d'attache (120) et entourant le blindage du faisceau (110).

2. Système (100) selon la revendication 1 le conducteur électrique (140) étant un fil de connexion de mise à la terre, par exemple un fil toronné de connexion ou un ruban de mise à la terre.

3. Système (100) selon l'une quelconque des revendications précédentes, le conducteur électrique étant un conducteur électrique unique (140).

4. Système (100) selon l'une quelconque des revendications précédentes, la structure de support étant conductrice.

5. Système (100) selon l'une quelconque des revendications 1 à 3, la structure de support étant diélectrique.

6. Système (100) selon l'une quelconque des revendications précédentes, la dimension du conducteur électrique (140) entre la référence de masse (150) et la base d'attache (120) pouvant être réglée entre 1 cm et 6 cm.

7. Système (100) selon l'une quelconque des revendications précédentes, le système comprenant en outre :

une autre base d'attache métallique (120) et une autre ceinture de câble (130), le blindage du faisceau (110) étant directement connecté à un œillet sur une première face de l'autre base d'attache (120) à l'aide de l'autre ceinture de câble (130) et une seconde face en regard de la première face de l'autre base d'attache métallique (120) étant fixée à la structure de support par un adhésif ;
un autre conducteur électrique (140), la référence de masse (150) étant connectée électriquement à l'autre base d'attache (120) par l'intermédiaire de l'autre conducteur électrique (140), l'autre conducteur électrique (140) étant fixé à la première face de l'autre base d'attache métallique (120), ou l'autre conducteur électrique (140) étant fixé à la seconde face de l'autre base d'attache métallique (120) ;
une autre dimension (D) de l'autre conducteur électrique (140) entre la référence de masse (150) et l'autre base d'attache (120) étant inférieure à 15 cm ; et
une distance (L) entre la base d'attache (120) et l'autre base d'attache (120) étant comprise entre 15 cm et 20 cm.

8. Système (100) selon la revendication 7, la base d'attache (120) et l'autre base d'attache (120) étant disposée sur une dimension d'un fuselage d'aéronef.

9. Procédé de fourniture d'un système pour atténuer la décharge électrostatique, ESD, et l'interférence électromagnétique, EMI, le procédé consistant à :

fournir (S310) un faisceau ayant un blindage, qui protège électriquement une pluralité de câbles du faisceau ;
fournir (S320) une base d'attache métallique et une ceinture de câble (130), et connecter (S330) directement le faisceau à un œillet sur une première face de la base d'attache à l'aide de la ceinture de câble par serrage de la ceinture de câble autour du faisceau de manière à entourer le blindage du faisceau et diriger la ceinture de câble à travers l'œillet de la base d'attache ;
fournir une structure de support et fixer une seconde face en regard de la première face de la base d'attache métallique par un adhésif ;
fournir (340) une référence de masse et un conducteur électrique, et connecter électriquement (S350) la référence de masse à la base d'attache par l'intermédiaire du conducteur électrique, la connexion électrique (S350) de la base d'attache à la référence de masse par l'intermédiaire du conducteur électrique consistant à fixer le conducteur électrique à la première face de la base d'attache métallique, ou à fixer le conducteur électrique à la seconde face de la base d'attache métallique ; et
une dimension du conducteur électrique entre la référence de masse et la base d'attache étant inférieure à 15 cm.

Fig.1

Fig.2

Fig.3

**FIG. 4**

OPTION 01: Grounding wire on top of the tie-base

Overshielded bundle

Tie-rap

Tie-base

Structural glue

Grounding wire

Substrate

Ground Reference Plane (GRP), eg. Aluminium grounding track

Grounding wire

Ground connection on conductive substrate (eg. Aluminium skin)

L, max. length of free running wire 60mm

Tape straps on top of grounding wire

Ground connection on non-conductive substrate (eg. CFRP skin)

EP 3 483 899 B1

# FIG. 5

VARIANT 01: Design for a tie-base grounding strap

Design for a tie-base
groundig strap

Strap length

**FIG. 6**

OPTION 02: Grounding wire underneath the tie-base

Overshielded bundle

Tie-rap

Tie-base

Structural glue

Grounding wire

Ground Reference Plane (GRP), eg. Aluminium grounding track

Substrate

Grounding wire underneath tie-base (not visible)

Ground connection on conductive substrate (eg. Aluminium skin)

Grounding wire underneath tie-base (not visible)

L, max. length of free running wire 60mm

Tape strap on top of grounding wire

Ground connection on non-conductive substrate (eg. CFRP skin)

EP 3 483 899 B1

# FIG. 7

Conductor length versus antenna efficiency to prevent antenna effects
(Source: Ing. Keith Armstrong, Partner Cherry Clough Consultants)

**EP 3 483 899 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005093198 A
- US 2016066483 A1
- JP H0720031 U
- JP 2011062025 A